# EUROPEAN PATENT SPECIFICATION

(11) **EP 4 195 738 B1**
(45) Date of publication and mention of the grant of the patent: **25.03.2026**
(21) Application number: 20948566.3
(22) Date of filing: 06.08.2020
(51) Int. Cl.: H04W 16/28, H04W 74/08, H04B 7/06

(54) **TERMINAL, RADIO COMMUNICATION METHOD, AND SYSTEM**
ENDGERÄT, FUNKKOMMUNIKATIONSVERFAHREN UND SYSTEM
TERMINAL, PROCÉDÉ DE COMMUNICATION RADIO ET SYSTÈME

(43) Date of publication of application: 14.06.2023
(73) Proprietor: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/030265
(87) International publication number: WO 2022/029975

(56) References cited:
- EP-A1- 4 192 072
- WO-A1-2020/090092
- NOKIA ET AL: "PUCCH Spatial Relation after CBRA BFR", vol. RAN WG1, no. e-Meeting; 20200525 - 20200605, 15 May 2020 (2020-05-15), XP052345639, Retrieved from the Internet <URL:https://ftp.3gpp.org/tsg_ran/WG1_RL1/TSGR1_101-e/Docs/R1-2004260.zip R1-2004260.docx> [retrieved on 20200515]
- ERICSSON: "Correction to contention-based beam failure recovery", vol. RAN WG1, no. Online; 20200525 - 20200605, 15 May 2020 (2020-05-15), XP052345584, Retrieved from the Internet <URL:https://ftp.3gpp.org/tsg_ran/WG1_RL1/TSGR1_101-e/Docs/R1-2004205.zip R1-2004205 Correction to contention-based beam failure recovery.docx> [retrieved on 20200515]
- "3rd Generation Partnership Project; Technical Specification Group Radio Access Network; NR; Physical layer procedures for control (Release 16)", 20 July 2020 (2020-07-20), XP052300289, Retrieved from the Internet <URL:https://ftp.3gpp.org/3guInternal/3GPP_ultimate_versions_to_be_transposed/sentToDpc/38213-g20.zip 38213-g20.docx> [retrieved on 20200720]
- MODERATOR (APPLE): "Feature Lead Summary on L1-SINR and SCell BFR", 3GPP DRAFT; R1-2004709, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 25 May 2020 (2020-05-25), Mobile Competence Centre ; 650, route des Lucioles ; F-06921 Sophia-Antipolis Cedex ; France , XP051890577
- NTT DOCOMO, INC, NOKIA, NOKIA SHANGHAI BELL, ERICSSON: "PUCCH/PDCCH beam after CBRA-BFR in Rel.16", 3GPP DRAFT; R1-2006701, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 7 August 2020 (2020-08-07), Mobile Competence Centre ; 650, route des Lucioles ; F-06921 Sophia-Antipolis Cedex ; France , XP051915441

## Description

### Technical Field

The present disclosure relates to a terminal, a radio communication method, and a system in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, specifications of LTE-Advanced (3GPP Rel. 10 to Rel. 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Non Patent Literature 2: NOKIA ET AL: "PUCCH Spatial Relation after CBRA BFR", 3GPP DRAFT, R1-2004260, XP052345639, 15.05.2020

EP 4 192 072 A1 (NTT DOCOMO INC [JP]), 7 June 2023 (2023-06-07), is cited as an earlier patent document (filed earlier than - but published on or after the filing (valid priority) date of the present application) in the E category, deemed relevant to novelty only. It is disclosed that with respect to update of QCL (beam) for a PDCCH after CFRA BFR, for a primary cell (PCell) or a primary secondary cell (PSCell), after 28 symbols from a last symbol of first PDCCH reception in which a UE detects a DCI format with a CRC scrambled by a C-RNTI or Modulation Coding Scheme C-RNTI (MCS-C-RNTI) in a search space set provided by a recovery search space ID (recoverySearchSpaceld), the UE may assume same antenna port quasi-co-location parameters as those associated with index q_{new} for PDCCH monitoring in a CORESET with index 0. With respect to update of a spatial relation (beam) for a PUCCH after CFRA BFR, For the PCell or the PSCell, after 28 symbols from a last symbol of a first PDCCH reception in a search space set provided by recoverySearchSpaceld for which the UE detects a DCI format with CRC scrambled by C-RNTI or MCS-C-RNTI and until the UE receives an activation command for PUCCH-SpatialRelation-Info or is provided PUCCH-SpatialRelationlnfo for PUCCH resource(s), the UE transmits a PUCCH on a same cell as the PRACH transmission using: - Use of a same spatial filter as that for last PRACH transmission (a same spatial filter as for the last PRACH transmission). It is noted that q_{new} may be an index of a new candidate beam (for example, an SSB/CSI-RS) selected by the UE in the BFR procedure, the new candidate beam being reported to a network by using a corresponding PRACH.

### Summary of Invention

### Technical Problem

In NR, it has been studied to perform procedure for a user terminal (user terminal or user equipment (UE)) to detect a beam failure (BF) and switch to another beam (which may also be referred to as beam failure recovery (BFR) procedure, BFR, or the like).

However, in the current Rel. 16 NR specification, appropriate beam update is not necessarily performed for an uplink control channel (physical uplink control channel (PUCCH)), a downlink control channel (physical downlink control channel (PDCCH)), and the like, after BFR. If appropriate beam update is not performed, throughput may decrease or communication quality may degrade.

Therefore, an object of the present disclosure is to provide a terminal, a radio communication method, and a base station that can appropriately update a beam in relation to BFR.

### Solution to Problem

The present invention is defined by the independent claims. Preferred embodiments are defined by the dependent claims. Further aspects and examples are provided for facilitating the understanding of the invention. A terminal according to an example includes: a transmitting section that transmits a random access preamble in a given cell in a case where a beam failure is detected; and a control section that, after a given period from a last symbol of first downlink control channel reception in which a downlink control information format having a cyclic redundancy check (CRC) scrambled by a cell radio network temporary identifier (C-RNTI) or a modulation coding scheme (MCS)-C-RNTI is detected in a search space set provided by a recovery search space identifier (ID), monitors a downlink control channel in a given control resource set using the same antenna port quasi-collocation parameters as parameters associated with an index of a reference signal corresponding to transmission of the random access preamble.

### Advantageous Effects of Invention

According to an aspect of the present disclosure, it is possible to appropriately update a beam in relation to BFR.

### Brief Description of Drawings

Fig. 1 is a view illustrating an example of beam recovery procedure in Rel. 15 NR.
Fig. 2 is a view illustrating an example of updating of a spatial relation for a PUCCH after CFRA BFR in a first embodiment.
Fig. 3 is a view illustrating an example of updating of QCL assumption for a PDCCH after CFRA BFR in a second embodiment.
Fig. 4 is a view illustrating an example of a schematic configuration of a radio communication system according to one embodiment.
Fig. 5 is a view illustrating an example of a configuration of a base station according to one embodiment.
Fig. 6 is a view illustrating an example of a configuration of a user terminal according to one embodiment.
Fig. 7 is a view illustrating an example of a hardware configuration of the base station and the user terminal according to one embodiment.

### Description of Embodiments

### (Beam Failure Recovery)

In NR, communication using beam forming has been studied. For example, UE and a base station (for example, gNodeB (gNB)) may use a beam to be used for signal transmission (which is also referred to as a transmission beam, a Tx beam, or the like) or a beam to be used for signal reception (which is also referred to as a reception beam, an Rx beam, or the like).

In a case where beam forming is used, degradation of radio link quality is assumed because it becomes susceptible to interference by an obstacle. A radio link failure (RLF) may frequently occur due to degradation of the radio link quality. If the RLF occurs, cell reconnection is required, and thus, frequent occurrence of the RLF leads to degradation of system throughput.

In the NR, to reduce occurrence of the RLF, it has been studied to perform procedure of switching to another beam (which may also be referred to as beam recovery (BR), beam failure recovery (BFR), Layer 1/Layer 2 (L1/L2) beam recovery, or the like) in a case where quality of a specific beam degrades. The BFR procedure may be simply referred to as BFR.

Note that a beam failure (BF) in the present disclosure may be referred to as a link failure, a radio link failure (RLF).

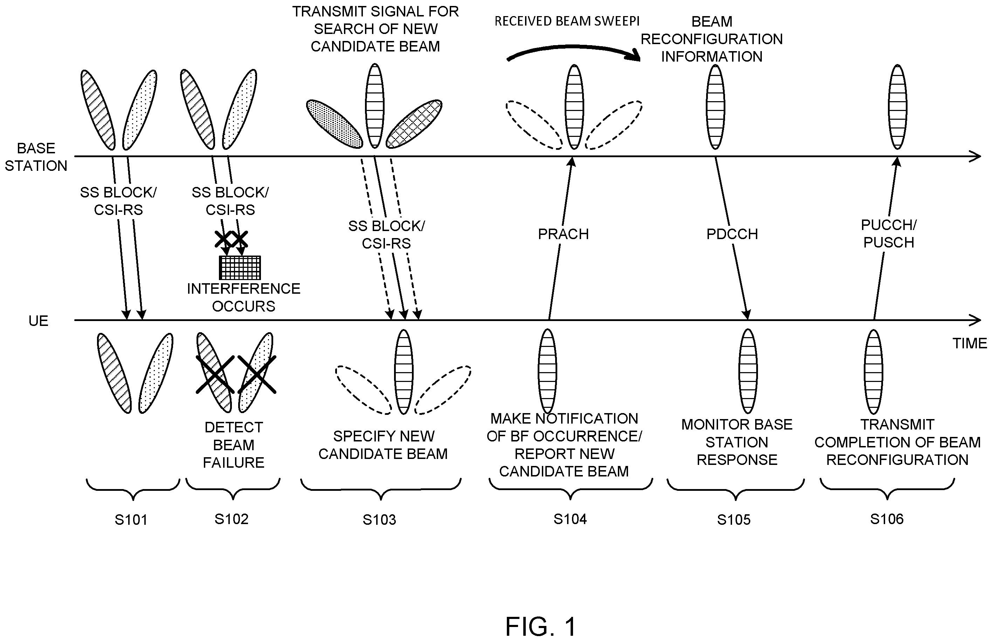

Fig. 1 is a view illustrating an example of beam recovery procedure in Rel. 15 NR. The number of beams, or the like, is an example, and is not limited thereto. In an initial state (step S101) in Fig. 1, the UE performs measurement on the basis of a reference signal (RS) resource transmitted using two beams.

The RS may be at least one of a synchronization signal block (SSB) or a channel state information RS (CSI-RS). Note that the SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal constituted by extending or changing these. The RS measured in step S101 may be referred to as an RS for beam failure detection (beam failure detection RS (BFD-RS)), or the like.

In step S102, interference in radio waves from the base station occurs, whereby the UE cannot detect the BFD-RS (or reception quality of the RS degrades). Such interference may occur due to, for example, an effect of an obstacle between the UE and the base station, fading, interference, or the like.

After a given condition is satisfied, the UE detects a beam failure. For example, the UE may detect occurrence of a beam failure in a case where a block error rate (BLER) is less than a threshold value for all of the configured BFD-RS (BFD-RS resource configurations). If occurrence of a beam failure is detected, a lower layer (physical (PHY) layer) of the UE may notify (instruct) a higher layer (MAC layer) of a beam failure instance.

Note that a criterion for determination is not limited to the BLER and may be reference signal received power in a physical layer (Layer 1 reference signal received power (L1-RSRP)). Further, instead of RS measurement or in addition to RS measurement, beam failure detection may be performed on the basis of a downlink control channel (physical downlink control channel (PDCCH)), or the like. The BFD-RS may be expected to be in a quasi-co-location (QCL) with a DMRS of the PDCCH to be monitored by the UE.

Here, the QCL is an indicator indicating statistical property of a channel. For example, in a case where one signal/channel and another signal/channel have a QCL relation, this may mean that it is possible to assume that between these plurality of different signals/channels, at least one of a Doppler shift, a Doppler spread, an average delay, a delay spread, or a spatial parameter (for example, spatial Rx filter/parameter, spatial Tx (transmission) filter/parameter) is the same (a QCL relation is established regarding at least one of these).

Note that, the spatial Rx parameter may correspond to a reception beam of the UE (for example, a reception analog beam), and the beam may be specified on the basis of spatial QCL. The QCL (or at least one element of the QCL) in the present disclosure may be read as the spatial QCL (sQCL).

Information regarding the BFD-RS (for example, an RS index, resource, number, number of ports, precoding, or the like), information regarding beam failure detection (BFD) (for example, the above-described threshold value), or the like, may be configured in (notified to) the UE by using higher layer signaling, or the like. The information regarding the BFD-RS may also be referred to as information regarding a resource for BFR, or the like.

In the present disclosure, the higher layer signaling may be any of, for example, radio resource control (RRC) signaling, medium access control (MAC) signaling, broadcast information, or the like, or a combination thereof.

For example, a MAC control element (CE), a MAC protocol data unit (PDU), or the like, may be used for the MAC signaling. The broadcast information may be, for example, a master information block (MIB), a system information block (SIB), remaining minimum system information (RMSI), other system information (OSI), and the like.

The MAC layer of the UE may start a given timer (which may also be referred to as a beam failure detection timer) in a case where a beam failure instance notification is received from the PHY layer of the UE. The MAC layer of the UE may trigger BFR (for example, start any one of random access procedure to be described later) after receiving the beam failure instance notification a given number of times (for example, beamFailureInstanceMaxCount configured by RRC) or more before the timer expires.

The base station may determine that the UE has detected a beam failure in a case where there is no notification from the UE (for example, a period during which there is no notification exceeds a given period) or in a case where a given signal (beam recovery request in step S104) is received from the UE.

In step S103, for beam recovery, the UE starts search for a new candidate beam to be newly used for communication. The UE may measure a given RS to select a new candidate beam corresponding to the RS. The RS measured in step S103 may be referred to as a new candidate beam identification RS (NCBI-RS), a CBI-RS, a candidate beam RS (CB-RS), or the like. The NCBI-RS may be the same as or different from the BFD-RS. Note that the new candidate beam may be referred to as a new candidate beam, a candidate beam, or a new beam.

The UE may determine a beam corresponding to an RS that satisfies a given condition as a new candidate beam. The UE may determine a new candidate beam on the basis of, for example, an RS whose L1-RSRP exceeds a threshold value among configured NCBI-RSs. Note that a criterion for determination is not limited to L1-RSRP. The determination may be made using at least any one of L1-RSRP, L1-RSRQ, or L1-SINR (signal to noise interference power ratio). L1-RSRP regarding an SSB may also be referred to as SS-RSRP. L1-RSRP regarding a CSI-RS may also be referred to as CSI-RSRP. Similarly, L1-RSRQ regarding an SSB may also be referred to as SS-RSRQ. L1-RSRQ regarding a CSI-RS may also be referred to as CSI-RSRQ. Further, similarly, L1-SINR regarding an SSB may be referred to as SS-SINR. L1-SINR regarding a CSI-RS may be referred to as CSI-SINR.

Information regarding an NCBI-RS (for example, an RS resource, number, number of ports, precoding, or the like), information regarding new candidate beam identification (NCBI) (for example, the above-described threshold value), or the like, may be configured in (notified to) the UE using higher layer signaling, or the like. The information regarding the NCBI-RS may be acquired on the basis of the information regarding the BFD-RS. The information regarding the NCBI-RS may also be referred to as information regarding an NCBI resource, or the like.

Note that the BFD-RS, NCBI-RS, or the like, may be read as a radio link monitoring reference signal (RLM-RS).

In step S104, the UE that has specified the new candidate beam transmits a beam failure recovery request (BFRQ). The beam failure recovery request may also be referred to as a beam recovery request signal, a beam failure recovery request signal, or the like.

The BFRQ may be transmitted using, for example, a physical random access channel (PRACH). The BFRQ may include information on the new candidate beam specified in step S103. A resource for the BFRQ may be associated with the new candidate beam. Notification of the information on the beam may be performed using, for example, a beam index (BI), a port index of a given reference signal, a resource index (for example, CSI-RS resource indicator (CRI), SSB resource indicator (SSBRI)), or the like.

In Rel. 15 NR, contention based BFR (CB-BFR) which is BFR based on contention based random access (CBRA) procedure and contention-free BFR (CF-BFR) which is BFR based on contention-free random access (CFRA) procedure are supported. In the CB-BFR or the CF-BFR, the UE may transmit a preamble (which is also referred to as an RA preamble, a physical random access channel (PRACH), an RACH preamble, or the like) as the BFRQ by using a PRACH resource.

Note that the CF-BFR may also be referred to as CFRA BFR. The CB-BFR may also be referred to as CBRA BFR. The CFRA procedure and the CFRA may be read as each other. The CBRA procedure and the CBRA may be read as each other.

In step S105, the base station that has detected the BFRQ transmits a response signal (which may also be referred to as a "BFR response", "gNB response", or the like) for the BFRQ from the UE. The response signal may include reconfiguration information (for example, DL-RS resource configuration information) for one or more beams.

The response signal may be transmitted, for example, in a UE common search space of the PDCCH. The notification of the response signal may be performed by using a PDCCH (DCI) having a cyclic redundancy check (CRC) scrambled by an identifier (for example, a cell radio network temporary identifier (C-RNTI)) of the UE. The UE may determine at least one of a transmission beam or a reception beam to be used, on the basis of beam reconfiguration information.

The UE may monitor the response signal on the basis of at least one of a control resource set (CORESET) for BFR or a search space set for BFR. For example, the UE may detect the DCI with the CRC scrambled with the C-RNTI in the BFR search space in a CORESET that is individually configured.

For the CB-BFR, it may be determined that contention resolution is successful in a case where the UE receives a PDCCH corresponding to the C-RNTI regarding the UE itself.

Regarding the processing in step S105, a period may be set for the UE to monitor a response from the base station (for example, gNB) for the BFRQ. The period may also be referred to as, for example, a gNB response window, a gNB window, a beam recovery request response window, a BFRQ response window, or the like. The UE may retransmit the BFRQ in a case where no gNB response is detected within the window period.

In step S106, the UE may transmit a message indicating that beam reconfiguration is completed to the base station. The message may be transmitted by the PUCCH or PUSCH, for example.

In step S106, the UE may receive RRC signaling indicating a configuration of a transmission configuration indication state (TCI state) to be used for the PDCCH or may receive a MAC CE indicating activation of the configuration.

Beam recovery success (BR success) may represent a case where the processing reaches step S106, for example. On the other hand, beam recovery failure (BR failure) may correspond to, for example, a case where the number of times of BFRQ transmission has reached a given number, or a beam-failure-recovery-timer has expired.

Note that numbers of these steps are merely numbers for description, and a plurality of these steps may be combined, or the order of these steps may be changed. Further, whether or not to perform BFR may be configured in the UE by using higher layer signaling.

### (QCL Assumption of PDCCH after BFR and PUCCH Spatial Relation)

In the Rel. 16 NR specification (TS 38.213 V16.0.0 § 6 Link recovery procedures) which has been studied so far, update of QCL (beam) for a PDCCH after BFR is described as follows.
· For PDCCH monitoring in a search space set provided by recoverySearchSpaceId and for corresponding PDSCH reception, the UE assumes the same antenna port quasi-collocation parameters as the ones associated with index q_{new} until the UE receives by higher layers an activation for a TCI state or any of the parameters tci-StatesPDCCH-ToAddList and/or tci-StatesPDCCH-ToReleaseList.
· For the PCell or the PSCell, after 28 symbols from a last symbol of a first PDCCH reception in a search space set provided by recoverySearchSpaceId where a UE detects a DCI format with CRC scrambled by C-RNTI or MCS-C-RNTI, the UE assumes same antenna port quasi-collocation parameters as the ones associated with index q_{new} for PDCCH monitoring in a CORESET with index 0.

In addition, in the Rel. 16 NR specification described above, update of a spatial relation (beam) for a PUCCH after BFR is described as follows.
· For the PCell or the PSCell, after 28 symbols from a last symbol of a first PDCCH reception in a search space set provided by recoverySearchSpace ID for which the UE detects a DCI format with CRC scrambled by C-RNTI or MCS-C-RNTI and until the UE receives an activation command for PUCCH-SpatialRelationInfo or is provided PUCCH-SpatialRelationInfo for PUCCH resource(s), the UE transmits a PUCCH on a same cell as the PRACH transmission using transmission conditions.
· A same spatial filter as for the last PRACH transmission is used.
· The transmission power is determined by using qᵤ=0, q_{d}=q_{new}, l = 0 in a formula (Subclause 7.2.1 of TS 38.213) used to determine the PUCCH transmission power.

Note that q_{new} may be an index of a new candidate beam (for example, an SSB/CSI-RS) selected by the UE in the BFR procedure and reported on a corresponding PRACH to a network (or an index of a new beam found in the BFR procedure).

In a normal case, qᵤ may be a PUCCH P0 ID (p0-PUCCH-Id) indicating P0 for a PUCCH (P0-PUCCH) in a PUCCH P0 set (p0-Set). l may be referred to as an index of a power control adjustment state, an index of a PUCCH power control adjustment state, a closed loop index, or the like. q_{d} may be an index (for example, set by PUCCH-PathlossReferenceRS) of a path-loss reference RS.

With the definition as described above, for a PDCCH/PUCCH, it is possible to avoid performing transmission/reception processing on the basis of an unclear beam after completion of the RA procedure for BFR until an explicit beam is configured/activated, so that it is possible to prevent degradation in communication quality.

However, the above definition does not consider a PUCCH (PUCCH (PUCCH resource) in which PUCCH-SpatialRelationInfo is not configured in a case where enableDefaultBeamPlForPUCCH is configured to the UE) using a default spatial relation. If the existing specification is used as it is, a PUCCH beam using the default spatial relation becomes fixed to q_{new} (in other words, the default spatial relation is released). In this case, there is a possibility that an appropriate beam cannot be used, and there is a possibility that throughput may decrease or communication quality may degrade.

The present inventors therefore have conceived of a method for appropriately updating a beam in relation to BFR.

Hereinafter, embodiments according to the present disclosure will be described in detail with reference to the drawings. Radio communication methods according to the respective embodiments may be applied singly or in combination.

In the present disclosure, "A/B" and "at least one of A or B" may be interchangeable.

In the present disclosure, a panel, a beam, a panel group, a beam group, an uplink (UL) transmission entity, a TRP, spatial relation information (SRI), a spatial relation, a control resource set (control resource set (CORESET)), a physical downlink shared channel (PDSCH), a codeword, a base station, a given antenna port (for example, a demodulation reference signal (DMRS) port), a given antenna port group (for example, a DMRS port group), a given group (for example, a code division multiplexing (CDM) group, a given reference signal group, and a CORESET group), a given resource (for example, a given reference signal resource), a given resource set (for example, a given reference signal resource set), a CORESET pool, a PUCCH group (PUCCH resource group), a spatial relation group, a downlink TCI state (DL TCI state), an uplink TCI state (UL TCI state), a unified TCI state (unified TCI state), a QCL, and the like, may be read as each other.

In the present disclosure, the index, the ID, the indicator, the resource ID, and the like may be read as each other.

### (Radio Communication Method)

### <First Embodiment>

In a first embodiment, the UE updates assumption of a spatial relation for a PUCCH after completing the CFRA BFR. The content regarding that the UE updating assumption of a spatial relation for a PUCCH after completing the CFRA BFR in the first embodiment does not form part of the claimed invention.

In the first embodiment, updating the spatial relation for PUCCH after CFRA BFR may be performed as follows:
· For the PCell or the PSCell, if the UE is provided PUCCH-SpatialRelationInfo, after X symbols from a last symbol of a first PDCCH reception in a search space set provided by recoverySearchSpaceId for which the UE detects a DCI format with CRC scrambled by C-RNTI or MCS-C-RNTI and until the UE receives an activation command for PUCCH-SpatialRelationInfo or is provided PUCCH-SpatialRelationInfo for PUCCH resource(s), the UE transmits a PUCCH on a same cell as the PRACH transmission using:
· a same spatial filter as for the last PRACH transmission),
a power determined as described in Clause 7.2.1 with qᵤ=0, q_{d}=q_{new}, l = 0.

Note that q_{new} may be an index of a new candidate beam (for example, an SSB/CSI-RS) selected by the UE in the CFRA BFR procedure and reported on a corresponding PRACH to a network (or an index of a new beam found in the BFR procedure). In other words, q_{new} may correspond to an SS/PBCH block index selected for the last PRACH transmission) or may correspond to an SS/PBCH block index provided by the BFR MAC CE or may correspond to an SS/PBCH block index provided in a higher layer (for example, MAC layer).

In other words, q_{newCBPA} (or q_{new}) may correspond to an SS/PBCH block index selected for the last PRACH transmission) or may correspond to an SS/PBCH block index provided by the BFR MAC CE or may correspond to an SS/PBCH block index provided in a higher layer (for example, MAC layer) if the UE is provided PUCCH-SpatialRelationInfo.

Further, X described above may be determined in advance by the specifications (for example, X = 28), may be set by the higher layer signaling, or the like, or may be determined on the basis of the UE capability (for example, the UE capability related to the BFR).

In addition, "until the UE receives an activation command for PUCCH-SpatialRelationInfo or is provided PUCCH-SpatialRelationInfo for PUCCH resource(s)" in the present disclosure may be read as "until the UE receives an activation command for PUCCH-SpatialRelationInfo and if PUCCH-SpatialRelationInfo is provided for PUCCH resource(s)".

The "if the UE is provided PUCCH-SpatialRelationInfo" of the present disclosure may be read as "if UE is provided enableDefaultBeamPlForPUCCH". Here, enableDefaultBeamPlForPUCCH may correspond to a higher layer (RRC) parameter related to PUCCH default beam path-loss activation.

In addition, "if the UE is provided PUCCH-SpatialRelationInfo" of the present disclosure may be read as "if the UE is provided PUCCH-SpatialRelationInfo or UE is provided enableDefaultBeamPlForPUCCH" and "if the UE is provided PUCCH-SpatialRelationInfo and UE is provided enableDefaultBeamPlForPUCCH".

The "PUCCH-SpatialRelationInfo" of the present disclosure may be read as "PUCCH-SpatialRelationInfo for (the) PUCCH resource(s)". For example, "if the UE is provided PUCCH-SpatialRelationInfo" of the present disclosure may be read as "if the UE is provided PUCCH-SpatialRelationInfo for PUCCH resource(s)". In addition, "until the UE receives an activation command for PUCCH-SpatialRelationInfo or is provided PUCCH-SpatialRelationInfo for PUCCH resource(s)" in the present disclosure may be read as "until the UE receives an activation command for PUCCH-SpatialRelationInfo and if PUCCH-SpatialRelationInfo is provided for PUCCH resource(s)".

In addition, "until the UE receives an activation command for PUCCH-SpatialRelationInfo or is provided PUCCH-SpatialRelationInfo for PUCCH resource(s)", "until the UE receives an activation command or configuration to update spatial domain filter for PUCCH resource(s)", "until the UE receives an activation command or configuration to update corresponding TCI state for default spatial relation for PUCCH resource(s)", and the like, in the present disclosure may be read as each other. In a case where this reading is performed, the above condition "if the UE is provided PUCCH-SpatialRelationInfo" may be deleted.

Note that this "activation command to update spatial domain filter for PUCCH resource(s)" may be activation (activation command, MAC CE for activation) of the TCI state for the CORESET referred to by the PUCCH that utilizes the default space relation. The "configuration to update spatial domain filter for PUCCH resource(s)" may be a parameter (tci-StatesPDCCH-ToAddList, tci-StatesPDCCH-ToReleaseList, and the like) of a list of TCI states for the PDCCH for the CORESET referred to by the PUCCH that utilizes the default spatial relation.

In addition, the above-described "until the UE receives an activation command or configuration to update spatial domain filter for PUCCH resource(s)" may be read as "if the UE is provided PUCCH-SpatialRelationInfo, until the UE receives an activation command for PUCCH-SpatialRelationInfo or is provided PUCCH-SpatialRelationInfo for PUCCH resource(s), otherwise, until the UE receives an activation command or configuration to update corresponding TCI state for default spatial relation for PUCCH resource(s)".

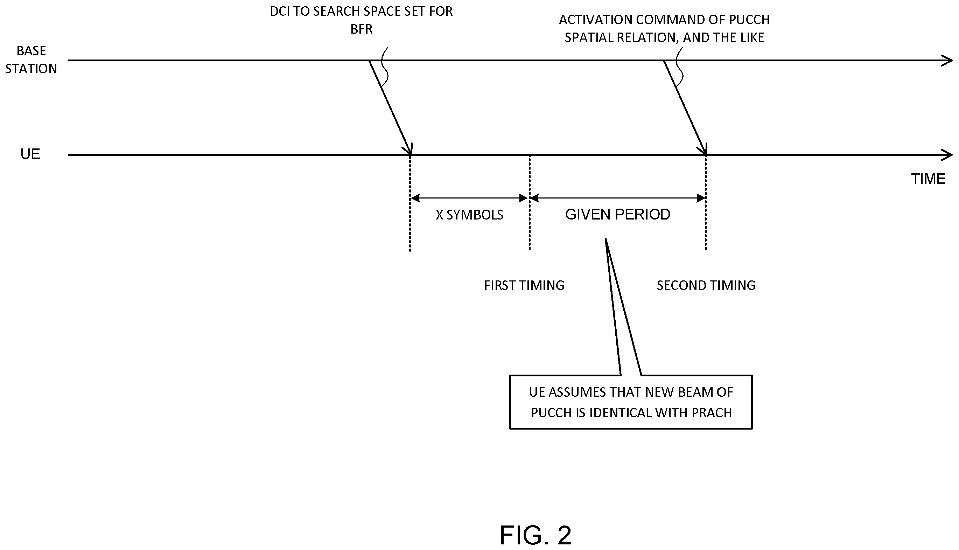

Fig. 2 is a view illustrating an example of update of a spatial relation for a PUCCH after the CFRA BFR in the first embodiment. In this example, the UE assumes that a new beam of a PUCCH is the same as (a new beam of) a PRACH (the above-described transmission conditions are used for transmission of the PUCCH) from a first timing to a second timing after completion of the CFRA BFR.

The first timing in Fig. 2 may be X symbols after the last symbol of the first PDCCH reception when the UE detects the DCI format in which the CRC is scrambled with the C-RNTI or the MCS-C-RNTI in the search space set (which may be referred to as a search space set for BFR) provided by the search space ID for recovery (recoverySearchSpaceId).

The second timing in Fig. 2 may be a timing at which an activation command for PUCCH spatial relation information is received for a cell in which the CFRA BFR has been performed.

Note that the updating of the spatial relation for the PUCCH after CFRA BFR in the first embodiment may be applied to a case where updating of the QCL assumption for the PDCCH after CFRA BFR in the second embodiment described later (updating of QCL assumption of CORESET (for example, all CORESET, CORESET #0) to q_{new}) is performed.

According to the first embodiment described above, the UE can appropriately use a beam recovered by the CFRA BFR for subsequent transmission of the PUCCH.

In addition, according to the first embodiment, a physical uplink control channel (PUCCH (PUCCH resource) in which PUCCH-SpatialRelationInfo is not configured in a case where enableDefaultBeamPlForPUCCH is configured to the UE) using the default spatial relation can be appropriately excluded from the application target of the update of the spatial relation after the CFRA BFR. In a case where the QCL assumption of the second embodiment is updated (for example, the QCL assumption for all CORESET after CFRA BFR is updated to q_{new}), the spatial relation of the PUCCH using the default spatial relation is updated without updating the spatial relation described in the first embodiment. In addition, according to this configuration, it is possible to prevent a situation in which the beam of the PUCCH using the default spatial relation becomes fixed to q_{new}. It is possible to take into account a case where q_{new} overwritten on the PUCCH in the default spatial relation cannot be released to re-apply the default spatial relation.

### <Second Embodiment>

In a second embodiment, the UE updates QCL assumption of a PDCCH after completing the CFRA BFR.

In the second embodiment, updating of the QCL assumption for a PDCCH after CFRA BFR is performed on the basis of at least one of the following:
· For the PCell or the PSCell, for PDCCH monitoring in a search space set provided by recoverySearchSpace Id and for corresponding PDSCH reception, the UE assets the same antenna port quasi-collocation parameters as the ones associated with index q_{new} until the UE receives by higher layers an activation for a TCI state or any of the parameters tci-StatesPDCCH-ToAddList and/or tci-StatesPDCCH-ToReleaseList;
· For the PCell or the PSCell, after X symbols from a last symbol of a first PDCCH reception in a search space set provided by recoverySearchSpace Id where a UE detects a DCI format with CRC scrambled by C-RNTI or MCS-C-RNTI, the UE monitors PDCCH in a CORESET on the same cell as the PRACH transmission using the same antenna port quasi-collocation parameters as the ones associate with index q_{new}.

Here, the above "CORESET" is read as at least one of an arbitrary CORESETs, all CORESETs, all CORESETs except a CORESET related to a search space for a random access procedure (the search space ID is set by a higher layer parameter "ra-SearchSpace") (all CORESETs, except CORESET associated with ra-SearchSpace), a specific CORESET, a CORESET other than CORESET#0, or CORESET #0. Here, the "arbitrary CORESET" and the "all CORESETs" may include CORESET #0 or may be CORESETs other than CORESET #0. Note that CORESET #0 may be a CORESET configured by a higher layer parameter controlResourceSetZero or may mean a CORESET with an index of 0 or may be read as CORESET with a minimum index.

The UE may perform the above operation of "performing PDCCH monitoring in a given CORESET with the same antenna port quasi-collocation parameters as parameters associated with the index g_{new}" under a condition that "until the UE receives by higher layers an activation for a TCI state or any of the parameters tci-StatesPDCCH-ToAddList and/or tci-StatesPDCCH-ToReleaseList".

For example, if the above "given CORESET" does not include CORESET #0 (or is not CORESET #0), the above operation may be performed under a condition that "until the UE receives by higher layers an activation for a TCI state or any of the parameters tci-StatesPDCCH-ToAddList and/or tci-StatesPDCCH-ToReleaseList".

If the above "given CORESET" includes CORESET #0 (or is CORESET #0), the above operation may be performed without the condition that "until the UE receives by higher layers an activation for a TCI state or any of the parameters tci-StatesPDCCH-ToAddList and/or tci-StatesPDCCH-ToReleaseList".

On the other hand, regardless of whether or not the above "given CORESET" includes CORESET #0, the above operation may be performed under this condition, or the above operation may be performed without this condition.

Further, X described above may be determined in advance by the specifications (for example, X = 28), may be set by the higher layer signaling, or the like, or may be determined on the basis of the UE capability (for example, the UE capability related to the BFR). X of the first embodiment and X of the second embodiment may be different values or the same value. In addition, q_{new} described above may be the same as q_{new} of the first embodiment.

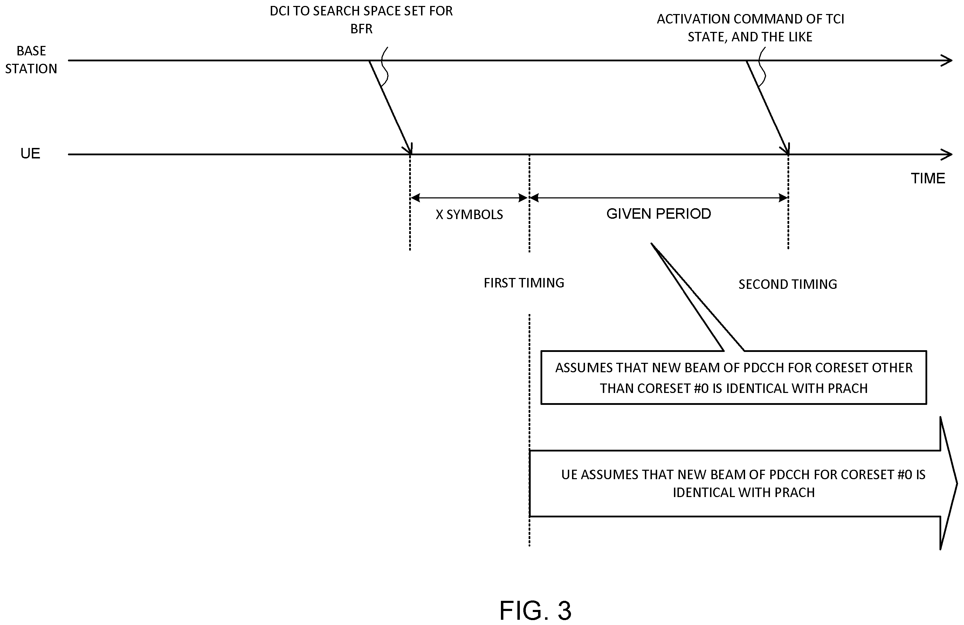

Fig. 3 is a view illustrating an example of update of the QCL assumption for a PDCCH after the CFRA BFR in the second embodiment. In this example, the UE assumes that a new beam of a PDCCH for a CORESET other than CORESET #0 is the same as (a new beam of) a PRACH (the QCL assumption of q_{new} described above is applied to the PDCCH) from a first timing to a second timing after completion of the CFRA BFR.

The first timing in Fig. 3 may be X symbols after the last symbol of the first PDCCH reception when the UE detects the DCI format in which the CRC is scrambled with the C-RNTI or the MCS-C-RNTI in the search space set provided by the search space ID for recovery (recoverySearchSpaceId).

The second timing in Fig. 3 may be a timing at which an activation command for the TCI state for the PDCCH is received for a cell in which the CFRA BFR has been performed.

Furthermore, in this example, the UE assumes that a new beam of a PDCCH for CORESET #0 is the same as (a new beam of) a PRACH (the QCL assumption of q_{new} described above is applied to the PDCCH) after the first timing after completion of the CFRA BFR. In this example, the UE receives the activation command in the TCI state for a CORESET other than CORESET #0 at the second timing, and the UE may continuously receive a PDCCH for CORESET #0 on the basis of the QCL assumption of q_{new} described above even after the second timing.

According to the second embodiment described above, the UE can appropriately use a beam recovered by the CFRA BFR for subsequent transmission of the PDCCH.

### <Other Embodiments>

Note that the content of the above-described embodiments may be introduced into TS 38.213 §6 Link recovery procedures in Rel. 16/17 NR similarly to the description related to BFR of a physical layer so far or may be described in another chapter (for example, TS 38.213 §8 Random access procedure).

Note that the above embodiments may be applied to the UE in which a specific parameter has been configured by RRC. The specific parameter may be, for example, a parameter that enables the BFR of Rel. 16 or a parameter (for example, "QCL_-BFR_r16", "BFR_r16", "BFR_r17") for configuring behavior of the QCL or the BFR for Rel. 16/17. If the specific higher layer parameter is not configured, the UE may follow the specification for updating the QCL assumption of the PUCCH spatial relation/PDCCH in Rel. 15 described above.

Note that the above embodiments may be applied to the UE that has reported specific capability information to the network. The capability information may be, for example, capability regarding the QCL assumption of the BFR in a special cell (SpCell). The UE that has reported the capability information may apply the at least one QCL assumption/spatial relation assumption in a case where the UE performs the BFR in the SpCell.

Note that the first embodiment may be used for updating a spatial relation for a PUSCH after the BFR. In this case, for example, "PUCCH" and "PUCCH spatial relation information (for a PUCCH resource)" of the first embodiment may be read as "PUSCH" and "PUSCH spatial relation information (SRS spatial relation information)", respectively. In addition, the UE may assume that a spatial relation for a specific PUSCH is also updated when a spatial relation for a PUCCH of the first embodiment is updated.

Note that the second embodiment may be used to update QCL assumption for a PDSCH after the BFR. In this case, for example, "PDCCH" of the second embodiment may be read as "PDSCH". In addition, the UE may assume that QCL assumption of a specific PDSCH is also updated when QCL assumption of a PDCCH of the second embodiment is updated.

Note that the PCell/PSCell of the present disclosure may be read as the SpCell. Further, the SpCell may mean a cell other than the PCell/PSCell.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

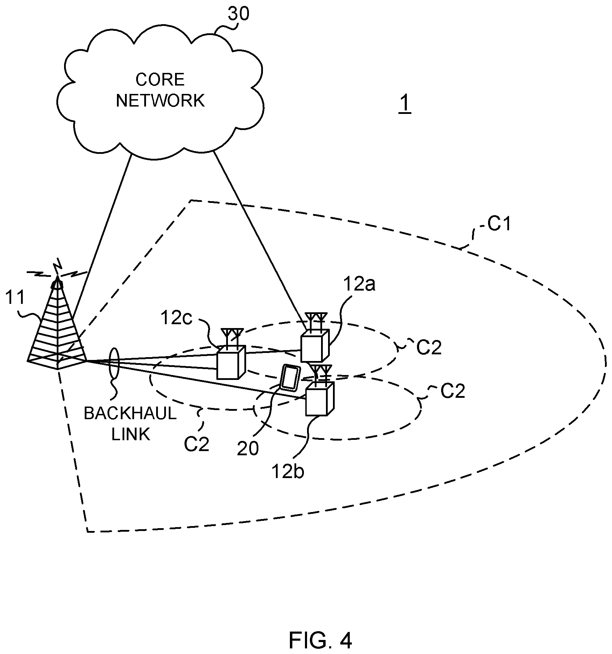

Fig. 4 is a view illustrating an example of a schematic configuration of a radio communication system according to an embodiment. A radio communication system 1 may be a system that implements communication using long term evolution (LTE), 5th generation mobile communication system New Radio (5G NR), and the like, drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like, of cells and the user terminals 20 are not limited to the aspects illustrated in the drawings. Hereinafter, the base stations 11 and 12 will be collectively referred to as a "base station 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) or dual connectivity (DC).

Each CC may be included in at least one of a frequency range 1 (FR1) or a frequency range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency ranges, definitions, and the like, of the FR1 and the FR2 are not limited thereto, and, for example, the FR1 may correspond to a frequency range higher than the FR2.

Further, the user terminal 20 may perform communication in each CC using at least one of time division duplex (TDD) or frequency division duplex (FDD).

The plurality of base stations 10 may be connected in a wired (e.g., an optical fiber or an X2 interface in compliance with common public radio interface (CPRI)) or wireless manner (e.g., NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access scheme based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like, may be used.

The radio access scheme may be referred to as a waveform. Note that in the radio communication system 1, another radio access scheme (for example, another single carrier transmission scheme or another multicarrier transmission scheme) may be used as the UL and DL radio access scheme.

In the radio communication system 1, as a downlink channel, a physical downlink shared channel (PDSCH), a physical broadcast channel (PBCH), a physical downlink control channel (PDCCH), or the like, shared by the user terminals 20 may be used.

Further, in the radio communication system 1, as an uplink channel, a physical uplink shared channel (PUSCH), a physical uplink control channel (PUCCH), a physical random access channel (PRACH), or the like, shared by the user terminals 20 may be used.

User data, higher layer control information, a system information block (SIB), and the like, are transmitted on the PDSCH. The PUSCH may transmit the user data, the higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be read as DL data, and the PUSCH may be read as UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space on the basis of search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like, in the present disclosure may be read as each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like, may be expressed without "link". Various channels may be expressed without adding "physical" at the beginning thereof.

In the radio communication system 1, a synchronization signal (SS), a downlink reference signal (DL-RS), and the like, may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like, may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like, may also be referred to as a reference signal.

Furthermore, in the radio communication system 1, a measurement reference signal (sounding reference signal (SRS)), a demodulation reference signal (DMRS), or the like, may be transmitted as an uplink reference signal (UL-RS). Note that, DMRSs may be referred to as "user terminal-specific reference signals (UE-specific Reference Signals)."

### (Base Station)

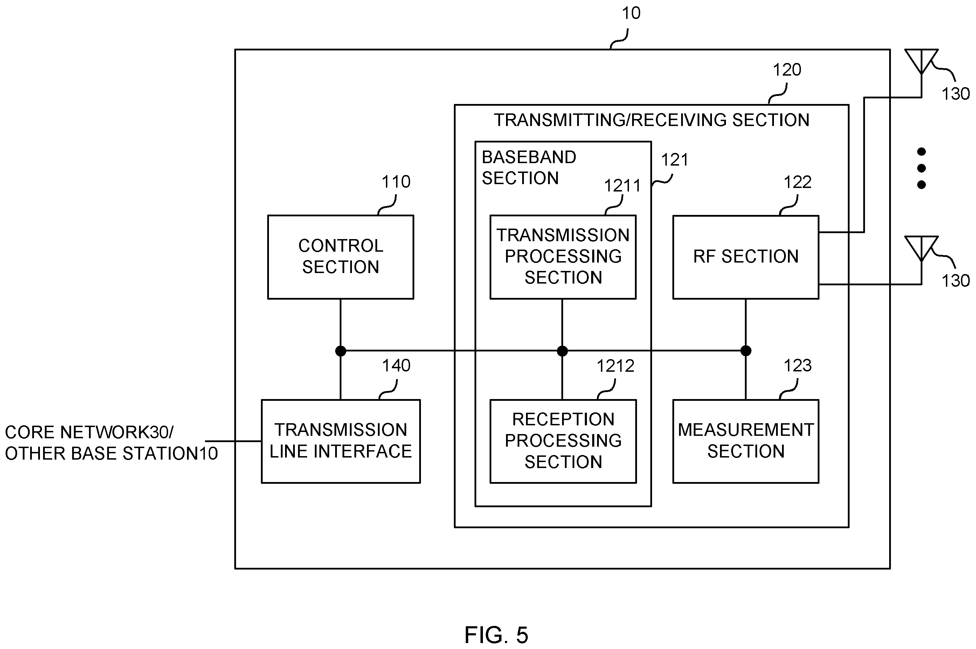

Fig. 5 is a view illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. Part of processing of each section described below may be omitted.

The control section 110 controls the entire base station 10. The control section 110 can be implemented by a controller, a control circuit, and the like, that are described on the basis of common recognition in the technical field related to the present disclosure.

The control section 110 may control signal generation, scheduling (for example, resource allocation or mapping), and the like. The control section 110 may control transmission/reception, measurement, and the like, using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like, to the transmitting/receiving section 120. The control section 110 may perform call processing (such as configuration and releasing) of a communication channel, management of a state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like, that are described on the basis of common recognition in the technical field related to the present disclosure.

The transmitting/receiving section 120 may be configured as an integrated transmitting/receiving section or may be configured by a transmitting section and a receiving section. The transmitting section may include the transmission processing section 1211 and the RF section 122. The receiving section may be implemented by the reception processing section 1212, the RF section 122, and the measurement section 123.

The transmission/reception antennas 130 can be implemented by antennas described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, on, for example, data, control information, and the like, acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like, on the baseband signal and may transmit a signal in the radio frequency band via the transmission/reception antenna 130.

Meanwhile, the transmitting/receiving section 120 (RF section 122) may perform amplification, filtering processing, demodulation to a baseband signal, and the like, on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data, and the like.

The transmitting/receiving section 120 (measurement section 123) may perform measurement on the received signal. For example, the measurement section 123 may perform radio resource management (RRM), channel state information (CSI) measurement, and the like, on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like, user data (user plane data), control plane data, and the like, for the user terminal 20.

Note that the transmitting section and the receiving section of the base station 10 in the present disclosure may include at least one of the transmitting/receiving section 120, the transmission/reception antenna 130, or the transmission line interface 140.

Note that the transmitting/receiving section 120 may receive, in a given cell (for example, SpCell), a random access preamble (random access preamble for beam failure recovery) transmitted from the user terminal 20 in a case where a beam failure is detected.

The control section 110 may assume that the user terminal 20 monitors a downlink control channel in a given control resource set by using the same antenna port quasi-collocation parameters as parameters associated with an index of a reference signal corresponding to transmission of the random access preamble (PRACH) after a given period from the last symbol of first downlink control channel reception in which a downlink control information format having a cyclic redundancy check (CRC) scrambled by a cell radio network temporary identifier (C-RNTI)) or a modulation coding scheme (MCS)-C-RNTI is detected in a search space set provided by a search space identifier (ID) for recovery.

### (User Terminal)

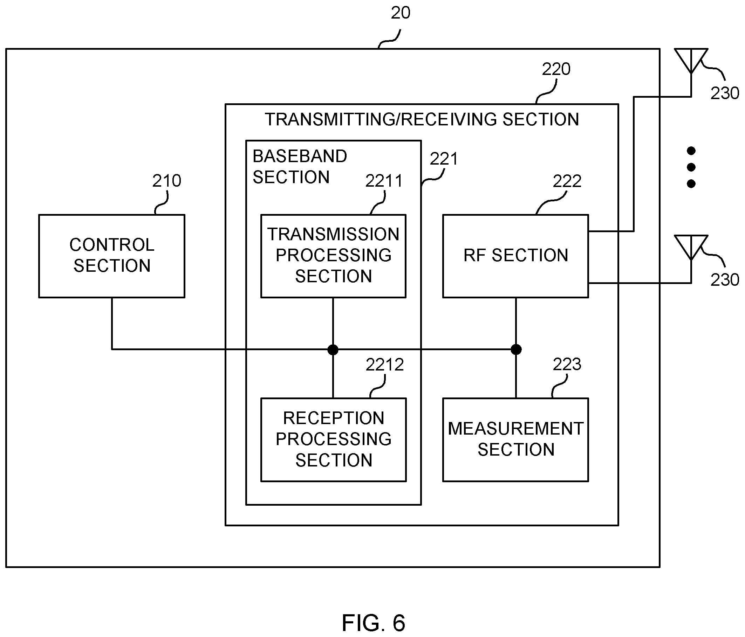

Fig. 6 is a view illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. Part of processing of each section described below may be omitted.

The control section 210 controls the entire user terminal 20. The control section 210 can include a controller, a control circuit, and the like, that are described on the basis of common recognition in the technical field related to the present disclosure.

The control section 210 may control signal generation, mapping, and the like. The control section 210 may control transmission/reception, measurement, and the like, using the transmitting/receiving section 220 and the transmission/reception antenna 230. The control section 210 may generate data, control information, a sequence, and the like, to be transmitted as signals and may forward the data, control information, sequence, and the like, to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmission/reception circuit, and the like, that are described on the basis of common recognition in the technical field related to the present disclosure.

The transmitting/receiving section 220 may be configured as an integrated transmitting/receiving section or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, on, for example, data, control information, and the like, acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. In a case where transform precoding is enabled for a given channel (e.g., PUSCH), the transmitting/receiving section 220 (transmission processing section 2211) may perform DFT processing as the transmission processing in order to transmit the channel using a DFT-s-OFDM waveform. In a case where transform precoding is not enabled, DFT processing need not be performed as the transmission processing.

The transmitting/receiving section 220 (RF section 222) may perform modulation to a radio frequency band, filtering processing, amplification, and the like, on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like, on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data, and the like.

The transmitting/receiving section 220 (measurement section 223) may perform measurement on the received signal. For example, the measurement section 223 may perform RRM measurement, CSI measurement, and the like, on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220, the transmission/reception antenna 230, or the transmission line interface 240.

Not that in a case where a beam failure is detected, the transmission/reception section 220 may transmit a random access preamble (random access preamble for beam failure recovery) in a given cell (for example, SpCell).

After a period (for example, X symbols) from the last symbol of first downlink control channel reception in which a downlink control information format having a cell-radio network temporary identifier (cell radio network temporary identifier (C-RNTI)) or a cyclic redundancy check (CRC) scrambled by a modulation coding scheme (MCS)-C-RNTI is detected in a search space set provided by a search space identifier (ID) for recovery, the control section 210 may monitor (may control the monitor) a downlink control channel in a given control resource set by using the same antenna port quasi-collocation parameters as parameters associated with an index (q_{new}) of a reference signal corresponding to transmission of the random access preamble (PRACH).

The given control resource set may be all control resource sets in the cell except a control resource set related to the search space ID for recovery.

In a case where the terminal is provided with the spatial relation information of the uplink control channel (PUCCH), the control section 210 may apply the same spatial filter as the random access preamble transmitted last in the cell to the uplink control channel after the given period and until specific information regarding the spatial relation information of the uplink control channel is received.

Here, the specific information regarding the spatial relation information for the uplink control channel may be, for example, at least one of an activation command for the PUCCH spatial relation information or a higher layer parameter (PUCCH-SpatialRelationInfo) of the PUCCH spatial relation information for a PUCCH resource.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. In other words, each functional block may be implemented by a single apparatus physically or logically aggregated or may be implemented by directly or indirectly connecting two or more physically or logically separate apparatuses (for example, in a wired manner or a wireless manner) and using these apparatuses. The functional block may be implemented by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

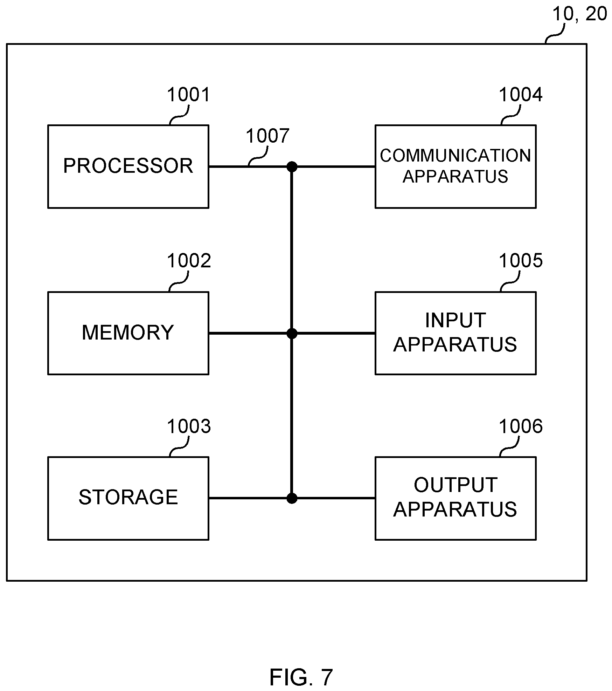

For example, the base station, the user terminal, and the like, according to one embodiment of the present disclosure may function as a computer that executes the processing of the radio communication method of the present disclosure. Fig. 7 is a view illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section and a unit can be read as each other. The hardware configuration of the base station 10 and the user terminal 20 may be designed to include one or more of the apparatuses illustrated in the drawings or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data from/to the memory 1002 and the storage 1003.

The processor 1001 controls the whole computer by, for example, running an operating system. The processor 1001 may be constituted with a central processing unit (CPU) including an interface with peripheral equipment, a control apparatus, an operation apparatus, a register, and the like. For example, at least part of the above-described control section 110 (210), transmitting/receiving section 120 (220), and the like, may be implemented by the processor 1001.

The processor 1001 reads programs (program codes), software modules, data, etc. from at least one of the storage 1003 or the communication apparatus 1004 into the memory 1002 and performs various types of processing according to these. As the program, a program that causes a computer to execute at least part of the operation described in the above-described embodiment is used. For example, the control section 110 (210) may be implemented by control programs that are stored in the memory 1002 and that run on the processor 1001, and other functional blocks may be implemented in a similar manner.

The memory 1002 is a computer-readable recording medium and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM), and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as a "secondary storage apparatus."

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like, in order to implement, for example, at least one of frequency division duplex (FDD) or time division duplex (TDD). For example, the transmitting/receiving section 120 (220), the transmission/reception antenna 130 (230), and the like, described above may be implemented by the communication apparatus 1004. The transmitting/receiving section 120 (220) may be implemented by being physically or logically separated into a transmitting section 120a (220a) and a receiving section 120b (220b).

The input apparatus 1005 is an input device for receiving input from outside (for example, a keyboard, a mouse, a microphone, a switch, a button, a sensor, or the like). The output apparatus 1006 is an output device that performs output to outside (for example, a display, a speaker, a light emitting diode (LED) lamp, or the like). Note that the input apparatus 1005 and the output apparatus 1006 may be provided in an integrated structure (for example, a touch panel).

Furthermore, these apparatuses including the processor 1001, the memory 1002, and the like, are connected by a bus 1007 so as to communicate information. The bus 1007 may be constituted with a single bus or may be constituted with buses that vary between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be read as terms that have the same or similar meanings. For example, a channel, a symbol, and a signal (signal or signaling) may be read as each other. Further, the signal may be a message. The reference signal can be abbreviated as an RS and may be referred to as a pilot, a pilot signal, and the like, depending on which standard applies. Further, a component carrier (CC) may be referred to as a cell, a frequency carrier, a carrier frequency, and the like.

A radio frame may be constituted with one or more periods (frames) in a time domain. Each of the one or more periods (frames) included in the radio frame may be referred to as a subframe. Further, the subframe may include one or more slots in the time domain. The subframe may be a fixed time duration (for example, 1 ms) that does not depend on numerology.

Here, the numerology may be a communication parameter to be applied to at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing to be performed by a transceiver in a frequency domain, or specific windowing processing to be performed by a transceiver in the time domain.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) to be transmitted in a time unit larger than the mini slot may be referred to as "PDSCH (PUSCH) mapping type A". A PDSCH (or a PUSCH) to be transmitted using a mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be read as each other.

For example, one subframe may be referred to as TTI, a plurality of consecutive subframes may be referred to as TTI, or one slot or one mini slot may be referred to as TTI. In other words, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", or the like, instead of a "subframe."

Here, the TTI refers to a minimum time unit of scheduling in radio communication, for example. For example, in the LTE system, a base station performs scheduling to allocate radio resources (a frequency bandwidth, transmission power, and the like, that can be used in each user terminal) to each user terminal in TTI units. Note that definition of the TTI is not limited to this.

The TTI may be a transmission time unit of a channel-coded data packet (transport block), a code block, a codeword, etc. or may be a processing unit of scheduling, link adaptation, etc. When the TTI is given, a time interval (e.g., the number of symbols) to which a transport block, a code block, a codeword, or the like, is actually mapped may be shorter than the TTI.

Note that, in a case where one slot or one mini slot is referred to as a "TTI", one or more TTIs (that is, one or more slots or one or more mini slots) may be a minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (partial or fractional TTI), a shortened subframe, a short subframe, a mini slot, a subslot, a slot, or the like.

Note that a long TTI (for example, a normal TTI, a subframe, etc.) may be read as a TTI having a time duration exceeding 1 ms, and a short TTI (for example, a shortened TTI) may be read as a TTI having a TTI duration less than the TTI duration of a long TTI and not less than 1 ms.

A resource block (RB) is the unit of resource allocation in the time domain and the frequency domain and may include one or more contiguous subcarriers in the frequency domain. The number of subcarriers included in the RB may be the same regardless of the numerology and may be twelve, for example. The number of subcarriers included in the RB may be determined on the basis of the numerology.

Also, the RB may include one or more symbols in the time domain and may be one slot, one mini slot, one subframe or one TTI in length. One TTI, one subframe, etc. may each be constituted with one or more resource blocks.

Note that one or more RBs may be referred to as a physical resource block (PRB), a sub-carrier group (SCG), a resource element group (REG), a PRB pair, an RB pair, and the like.

Furthermore, the resource block may include one or more resource elements (REs). For example, one RE may be a radio resource field of one subcarrier and one symbol.

A bandwidth part (BWP) (which may be referred to as a partial bandwidth, or the like) may represent a subset of contiguous common resource blocks (RBs) for a given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to assume transmission/reception of a given signal/channel outside the active BWP. Note that a "cell", a "carrier", etc. in the present disclosure may be read as a "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like, can be variously changed.

The information, parameters, etc. described in the present disclosure may be represented using absolute values or may be represented using relative values with respect to given values or may be represented using other corresponding information. For example, a radio resource may be specified by a given index.

The names used for parameters etc. in the present disclosure are in no respect limiting. Further, any mathematical expression, or the like, that uses these parameters may differ from those explicitly disclosed in the present disclosure. Various channels (PUCCH, PDCCH, and the like) and information elements can be identified by any suitable names, and thus, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, and the like, can be output in at least one of a direction from a higher layer to a lower layer or a direction from a lower layer to a higher layer. Information, signals, and the like, may be input and output via a plurality of network nodes.

The information, signals, and the like, that are input and/or output may be stored in a specific location (for example, in a memory) or may be managed in a control table. The information, signals, and the like, to be input and output can be overwritten, updated, or appended. The output information, signals, and the like, may be deleted. The information, signals, and the like, that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, notification of given information (for example, notification of information to the effect that "X holds") does not necessarily have to be performed explicitly and can be performed implicitly (for example, by not making notification of the given information or by making notification of another information).

Determination may be performed using values represented by one bit (0 or 1), may be performed using boolean values that represent true or false or may be performed by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, instructions, information, and the like, may be transmitted and received via communication media. For example, in a case where software is transmitted from a website, a server, or another remote source by using at least one of a wired technology (coaxial cable, optical fiber cable, twisted pair, digital subscriber line (DSL), or the like) or a wireless technology (infrared rays, microwaves, or the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide a communication service through a base station subsystem (for example, small base station for indoors (remote radio head (RRH))). The term "cell" or "sector" refers to part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other suitable terms.

At least one of the base station or the mobile station may be called as a transmission apparatus, a reception apparatus, a wireless communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during communication operation. For example, at least one of the base station or the mobile station may be an Internet of Things (IoT) device such as a sensor.

Further, the base station in the present disclosure may be read as the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the functions of the base station 10 described above. Further, terms such as "uplink" and "downlink" may be read as terms corresponding to communication between terminals (for example, "side"). For example, an uplink channel and a downlink channel may be read as a side channel.

Likewise, the user terminal in the present disclosure may be read as a base station. In this case, the base station 10 may have the functions of the user terminal 20 described above.

In the present disclosure, operation performed by the base station may be performed by an upper node thereof in some cases. In a network including one or more network nodes with base stations, it is clear that various kinds of operation performed for communication with a terminal can be performed by a base station, one or more network nodes (examples of which include but are not limited to mobility management entity (MME) and serving-gateway (S-GW)) other than the base station, or a combination thereof.

The aspects/embodiments described in the present disclosure may be used individually or in combinations, which may be switched depending on modes of implementation. Further, the order of processing procedure, sequences, flowcharts, and the like, of the aspects/embodiments described in the present disclosure may be re-ordered as long as there is no inconsistency. For example, although various methods have been described in the present disclosure with various components of steps using exemplary orders, the specific orders that are described herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "on the basis of" as used in the present disclosure does not mean "only on the basis of", unless otherwise specified. In other words, the phrase "on the basis of" means both "only on the basis of" and "at least on the basis of".

Reference to elements with designations such as "first", "second" and so on as used in the present disclosure does not generally limit the number/quantity or order of these elements. These designations can be used in the present disclosure, as a convenient way of distinguishing between two or more elements. Thus, reference to the first and second elements does not imply that only two elements may be employed, or that the first element must precede the second element in some way.

The term "determining" as used in the present disclosure may include a wide variety of operation. For example, "determining" may be regarded as judging, calculating, computing, processing, deriving, investigating, looking up (or searching or inquiring) (for example, looking up in a table, database, or another data structure), ascertaining, and the like.

Furthermore, "determining" as used herein may be interpreted to mean making determination related to receiving (for example, receiving information), transmitting (for example, transmitting information), inputting, outputting, accessing (for example, accessing data in a memory) and so on.

In addition, "determining" as used herein may be interpreted to mean making determination related to resolving, selecting, choosing, establishing, comparing and so on. In other words, "determining" as used herein may be interpreted to mean making determination related to some action.

In addition, "determining" as used herein may be interpreted to mean "assuming", "expecting", "considering" and so on.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connection or coupling between two or more elements and may include presence of one or more intermediate elements between two elements that are "connected" or "coupled" to each other. The coupling or connection between the elements may be physical, logical, or a combination of these. For example, "connection" may be read as "access".

In the present disclosure, in a case where two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the term "A and B are different" may mean "A and B are different from each other". Note that the term may mean that "A and B are different from C". The terms such as "separate", "coupled", and the like, may be interpreted similarly to "different".

In a case where "include", "including", and variations of these are used in the present disclosure, these terms are intended to be inclusive similarly to the term "comprising". Moreover, the term "or" used in the present disclosure is intended to be not an exclusive-OR.

In the present disclosure, in a case where articles are added by translation, for example, as "a", "an", and "the" in English, the present disclosure may include nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the scope of the invention defined on the basis of the description of claims. Consequently, the description of the present disclosure is provided only for the purpose of explaining examples and should by no means be construed to limit the invention according to the present disclosure in any way.

## Claims

1. A terminal (20) comprising:
a transmitting section (220) configured to, when beam failure is detected, transmit a random access preamble in a cell in a contention-free random access, CFRA, procedure; and
a control section (210) configured to perform monitoring, in a search space set provided by a recovery search space identifier, ID, of a downlink control channel, PDCCH, in all control resource sets, CORESETs, in the cell using a quasi co-location, QCL, parameter of a same antenna port as an antenna port associated with an index of a reference signal corresponding to transmission of the random access preamble in the CFRA procedure, after a given duration from a last symbol of a first PDCCH reception, in which a downlink control information, DCI, format with cyclic redundancy check, CRC, scrambled by a cell radio network temporary identifier, C-RNTI, or a modulation coding scheme, MCS, C-RNTI is detected.

2. A radio communication method for a terminal (20), comprising:
when beam failure is detected, transmitting a random access preamble in a cell in a contention-free random access, CFRA, procedure; and
performing monitoring, in a search space set provided by a recovery search space identifier, ID, of a downlink control channel, PDCCH, in all control resource sets, CORESETs, in the cell using a quasi co-location, QCL, parameter of a same antenna port as an antenna port associated with an index of a reference signal corresponding to transmission of the random access preamble in the CFRA procedure, after a given duration from a last symbol of a first PDCCH reception, in which a downlink control information, DCI, format with cyclic redundancy check, CRC, scrambled by a cell radio network temporary identifier, C-RNTI, or a modulation coding scheme, MCS, C-RNTI is detected.

3. A system comprising a terminal (20) defined in claim 1 and a base station (10) wherein
the base station (10) comprises:
a receiving section (120) configured to receive the random access preamble.

## Patentansprüche

1. Endgerät (20), umfassend:
einen Übertragungsabschnitt (220), der konfiguriert ist, um, wenn ein Strahlausfall detektiert wird, eine Zufallszugriffspräambel in einer Zelle in einer kontentionsfreien Zufallszugriffsprozedur, CFRA, zu übertragen; und
einen Steuerabschnitt (210), der konfiguriert ist, um eine Überwachung, in einem Suchraumset bereitgestellt durch einen Recovery-Suchraumidentifikator, ID, eines Downlink-Steuerkanals, PDCCH, in allen Steuerressourcensätzen, CORESETs, in der Zelle unter Verwendung eines Quasi-Kolokation-, QCL-, Parameter desselben Antennenports wie ein Antennenport, der mit einem Index eines Referenzsignals entsprechend einer Übertragung der Zufallszugriffspräambel in der CFRA-Prozedur assoziiert ist, nach einer vorgegebenen Dauer ab einem letzten Symbol eines ersten PDCCH-Empfangs, in dem ein Downlink-Steuerinformation-, DCI-, Format mit zyklischer Redundanzprüfung, CRC, verwürfelt durch einen Cell-Radio Network Temporary Identifier, C-RNTI, oder durch ein Modulationskodierungsschema, MCS, C-RNTI detektiert wird, durchzuführen.

2. Funkkommunikationsverfahren für ein Endgerät (20), umfassend:
wenn ein Strahlausfall detektiert wird, Übertragen einer Zufallszugriffspräambel in einer Zelle in einer kontentionsfreien Zufallszugriffsprozedur, CFRA; und
Durchführen einer Überwachung, in einem Suchraumset, bereitgestellt durch einen Recovery-Suchraumidentifikator, ID, eines Downlink-Steuerkanals, PDCCH, in allen Steuerressourcensätzen, CORESETs, in der Zelle unter Verwendung eines Quasi-Kolokation-, QCL-, Parameter desselben Antennenports wie ein Antennenport, der mit einem Index eines Referenzsignals entsprechend einer Übertragung der Zufallszugriffspräambel in der CFRA-Prozedur assoziiert ist, nach einer vorgegebenen Dauer ab einem letzten Symbol eines ersten PDCCH-Empfangs, in dem ein Downlink-Steuerinformation-, DCI-, Format mit zyklischer Redundanzprüfung, CRC, verwürfelt durch einen Cell-Radio Network Temporary Identifier, C-RNTI, oder durch ein Modulationskodierungsschema, MCS, C-RNTI detektiert wird.

3. System, umfassend ein Endgerät (20) definiert in Anspruch 1 und eine Basisstation (10), wobei,
die Basisstation (10) umfasst:
einen Empfangsabschnitt (120), ausgebildet, die Zufallszugriffspräambel zu empfangen.

## Revendications

1. Terminal (20) comprenant :
une section de transmission (220) configurée pour, lorsqu'une défaillance de faisceau est détectée, transmettre un préambule d'accès aléatoire dans une cellule dans une procédure d'accès aléatoire sans conflit, CFRA ; et
une section de commande (210) configurée pour mettre en œuvre une surveillance, dans un ensemble d'espaces de recherche fourni par un identifiant, ID, d'espace de recherche de récupération d'un canal de commande de liaison descendante, PDCCH, dans tous les ensembles de ressources de commande, CORESET, dans la cellule en utilisant un paramètre de quasi-colocalisation, QCL, d'un même port d'antenne qu'un port d'antenne associé à un indice d'un signal de référence correspondant à la transmission du préambule d'accès aléatoire dans la procédure CFRA, après une durée donnée à partir d'un dernier symbole d'une première réception de PDCCH, dans laquelle un format d'information de commande de liaison descendante, DCI, avec contrôle de redondance cyclique, CRC, embrouillé par un identifiant temporaire de réseau radio de cellule, C-RNTI, ou un C-RNTI de schéma de modulation et de codage, MCS, est détecté.

2. Procédé de communication radio pour un terminal (20), comprenant :
lorsqu'une défaillance de faisceau est détectée, la transmission d'un préambule d'accès aléatoire dans une cellule dans une procédure d'accès aléatoire sans conflit, CFRA ; et
la mise en œuvre d'une surveillance, dans un ensemble d'espaces de recherche fourni par un identifiant, ID, d'espace de recherche de récupération d'un canal de commande de liaison descendante, PDCCH, dans tous les ensembles de ressources de commande, CORESET, dans la cellule en utilisant un paramètre de quasi-colocalisation, QCL, d'un même port d'antenne qu'un port d'antenne associé à un indice d'un signal de référence correspondant à la transmission du préambule d'accès aléatoire dans la procédure CFRA, après une durée donnée à partir d'un dernier symbole d'une première réception de PDCCH, dans laquelle un format d'information de commande de liaison descendante, DCI, avec contrôle de redondance cyclique, CRC, embrouillé par un identifiant temporaire de réseau radio de cellule, C-RNTI, ou par un C-RNTI de schéma de modulation et de codage, MCS, est détecté.

3. Système comprenant un terminal (20) défini dans la revendication 1 et une station de base (10) dans lequel,
la station de base (10) comprend :
une section de réception (120) configurée pour recevoir le préambule d'accès aléatoire.
